# EUROPEAN PATENT APPLICATION

(11) **EP 4 801 095 A1**
(43) Date of publication of application: **02.09.2026**
(21) Application number: 24938499.1
(22) Date of filing: 10.09.2024
(51) Int. Cl.: H04W 24/02

(54) **COMMUNICATION METHODS AND APPARATUSES, COMMUNICATION DEVICES, STORAGE MEDIUM, AND COMPUTER PROGRAM PRODUCT**

(30) Priority: 17.05.2024 CN 202410618211; 07.06.2024 CN 202410739405
(71) Applicant: China Telecom Corporation Limited Technology Innovation Center, Beijing 102209 (CN); China Telecom Corporation Limited, Beijing 100033 (CN)
(72) Inventor: GUO, Maowen, Beijing 100033 (CN); TANG, Mingwei, Beijing 100033 (CN); ZHAO, Jing, Beijing 100033 (CN)
(74) Representative: Reddie & Grose LLP
(86) International application number: PCT/CN2024/117979
(87) International publication number: WO 2025/236487

(57) **Abstract**

The present application relates to communication methods and apparatuses, communication devices, a storage medium, and a computer program product. A method comprises: acquiring first information sent by an on board network element, wherein the first information at least comprises an operating mode of the on board network element; and performing communication processing on the basis of a terminal capability and the first information, wherein the terminal capability indicates whether a terminal supports a store-and-forward mode. By using the method, the cooperation between the terminal and a network can be effectively realized when both the terminal and the on board network element support a plurality of operating modes, thereby improving the communication reliability.

## Description

### RELATED APPLICATIONS

This application claims priority to Chinese Patent Application No. 202410618211.5, entitled "Communication Methods and Apparatuses, Communication Devices, Storage Medium, and Computer Program Product", filed on May 17, 2024, and Chinese Patent Application No. 202410739405.0, entitled "Communication Methods and Apparatuses, Communication Devices, Storage Medium, and Computer Program Product", filed on June 7, 2024, which are incorporated herein by reference in their entireties.

### TECHNICAL FIELD

The present application relates to the field of communication technologies, and in particular, to communication methods and apparatuses, communication devices, a storage medium, and a computer program product.

### BACKGROUND

At present, the Internet of Things Non-Terrestrial Networking (IoT-NTN) technology can be widely applied to the vertical industries such as marine transportation, wilderness transportation, energy harvesting, agriculture, and environmental protection, and has the characteristics of wide coverage, low rate, or the like.

Since the number of satellites and the number of gateway stations are limited, service links and feeder links of the satellites cannot be simultaneously available, and in order to improve the communication service capability of an IoT-NTN, an on board network element can have a store-and-forward capability in a regenerative mode. That is, when the service link is available and the feeder link is unavailable, the on board network element can communicate with a terminal, receive a message sent by the terminal in a coverage range, cache the message, and forward a cached message from a terrestrial network to the terminal; when the feeder link is available and the service link is unavailable, the on board network element can communicate with the terrestrial network through a gateway station, transmit the terminal message cached on a satellite back to the ground, receive the message sent to the terminal by the terrestrial network, and cache the message.

However, since each of the on board network element and the terminal has multiple operating modes, how to enable the terminal to communicate through the on board network element in the multiple operating modes is a technical problem to be solved urgently.

### SUMMARY

Embodiments of the present application provide communication methods and apparatuses, communication devices, a storage medium, and a computer program product, which can effectively realize the cooperation between a terminal and a network when both the terminal and an on board network element support a plurality of operating modes, thereby improving the communication reliability.

A communication method applied to a terminal comprises:
acquiring first information sent by an on board network element, wherein the first information at least comprises an operating mode of the on board network element; and
performing communication processing on the basis of a terminal capability and the first information, wherein the terminal capability indicates whether the terminal supports a store-and-forward mode.

In an embodiment, the operating mode of the on board network element at least comprises one of a normal operating mode, the store-and-forward mode and a coexistence mode.

In an embodiment, when the operating mode of the on board network element is indicated as the normal operating mode and/or the coexistence mode, the method further comprises:
acquiring second information, the second information comprising time information of a terminal servable by the on board network element.

In an embodiment, the time information of the terminal servable by the on board network element comprises a time range between a start time of the terminal servable by the on board network element and an end time of the terminal servable by the on board network element.

In an embodiment, performing the communication processing on the basis of the terminal capability and the first information comprises:
if the operating mode of the on board network element is indicated as the coexistence mode and the terminal supports the store-and-forward mode, sending a connection request to the on board network element, the connection request carrying information indicating that the terminal supports the store-and-forward mode.

In an embodiment, performing the communication processing on the basis of the terminal capability and the first information comprises:
if the operating mode of the on board network element is indicated as the coexistence mode and the terminal does not support the store-and-forward mode, determining whether to send a connection request according to the second information, and if a current time point belongs to the time range of the terminal servable by the on board network element, sending a connection request to the on board network element.

In an embodiment, performing the communication processing on the basis of the terminal capability and the first information comprises:
if the operating mode of the on board network element is indicated as the store-and-forward mode and the terminal supports the store-and-forward mode, sending a connection request to the on board network element, the connection request carrying information indicating that the terminal supports the store-and-forward mode.

In an embodiment, performing the communication processing on the basis of the terminal capability and the first information comprises:
if the operating mode of the on board network element is indicated as the store-and-forward mode and the terminal does not support the store-and-forward mode, not sending a connection request to the on board network element.

In an embodiment, performing the communication processing on the basis of the terminal capability and the first information comprises:
if the operating mode of the on board network element is indicated as the normal operating mode, determining whether to send a connection request according to the second information, and if a current time point belongs to the time range of the terminal servable by the on board network element, sending a connection request to the on board network element.

In an embodiment, the connection request at least comprises one or more of a radio resource control (RRC) connection request, an RRC connection resume request, and an RRC connection reestablishment request.

In an embodiment, performing the communication processing on the basis of the terminal capability and the first information comprises:
if the operating mode of the on board network element is indicated as the coexistence mode and the terminal supports the store-and-forward mode, sending an attach request NAS message to the on board network element, the attach request NAS message carrying information indicating that the terminal supports the store-and-forward mode.

In an embodiment, performing the communication processing on the basis of the terminal capability and the first information comprises:
if the operating mode of the on board network element is indicated as the store-and-forward mode and the terminal supports the store-and-forward mode, sending an attach request NAS message to the on board network element, the attach request NAS message carrying information indicating that the terminal supports the store-and-forward mode.

In an embodiment, the first information further comprises a satellite identity (ID).

A communication method applied to an on board network element comprises:
sending first information to a terminal, wherein the first information at least comprises an operating mode of the on board network element, and is configured to enable the terminal to perform communication processing on the basis of a terminal capability and the first information.

In an embodiment, the operating mode of the on board network element at least comprises one of a normal operating mode, a store-and-forward mode and a coexistence mode.

In an embodiment, when the operating mode of the on board network element is indicated as the normal operating mode and/or the coexistence mode, the method further comprises:
sending second information to the terminal, the second information comprising time information of a terminal servable by the on board network element.

In an embodiment, the time information of the terminal servable by the on board network element comprises a time range between a start time of the terminal servable by the on board network element and an end time of the terminal servable by the on board network element.

In an embodiment, the time information of the terminal servable by the on board network element is calculated by the on board network element according to a satellite ephemeris and terrestrial gateway station information.

In an embodiment, the operating mode of the on board network element is configured by a preset strategy.

In an embodiment, the method further includes:
receiving a connection request sent by the terminal.

In an embodiment, the method further includes:
if the operating mode of the on board network element is indicated as the coexistence mode and the received connection request contains information indicating that the terminal supports the store-and-forward mode, determining a state of a feeder link:
if the feeder link is unavailable, sending a first connection message to the terminal, wherein the first connection message carries configuration information indicating that the terminal operates in the store-and-forward mode; and
if the feeder link is available, sending a second connection message to the terminal, wherein the second connection message carries configuration information indicating that the terminal operates in the normal operating mode.

In an embodiment, the method further includes:
if the operating mode of the on board network element is indicated as the coexistence mode and the received connection request does not contain information indicating that the terminal supports the store-and-forward mode, determining a state of a feeder link:
if the feeder link is unavailable, sending a rejection message to the terminal, wherein the rejection message carries a rejection reason, and the rejection reason indicates that the feeder link is unavailable; and
if the feeder link is available, sending a connection message to the terminal.

In an embodiment, the method further includes:
if the operating mode of the on board network element is indicated as the store-and-forward mode and the received connection request contains indication information indicating that the terminal supports the store-and-forward mode, sending a connection message to the terminal, wherein the connection message carries configuration information indicating that the terminal operates in the store-and-forward mode.

In an embodiment, the method further includes:
if the operating mode of the on board network element is indicated as the normal operating mode and a connection message sent by the terminal is received, determining a state of a feeder link:
if the feeder link is unavailable, sending a rejection message to the terminal, wherein the rejection message contains a rejection reason, and the rejection reason indicates that the feeder link is unavailable; and
if the feeder link is available, sending a connection message to the terminal.

In an embodiment, the connection request at least comprises one or more of an RRC connection request, an RRC connection resume request, and an RRC connection reestablishment request;
when the connection request is the RRC connection request, the connection message is an RRC connection setup message, and the rejection message is an RRC connection reject message;
when the connection request is the RRC connection resume request, the connection message is an RRC connection resume message, and the rejection message is an RRC connection resume reject message; and
when the connection request is the RRC connection reestablishment request, the connection message is an RRC connection reestablishment message, and the rejection message is an RRC connection reestablishment reject message.

In an embodiment, the method further includes:
receiving an attach request NAS message sent by the terminal, wherein the attach request NAS message carries information indicating that the terminal supports a store-and-forward mode.

In an embodiment, the method further includes:
determining whether the attach request NAS message of the terminal is cached;
if the attach request NAS message of the terminal is cached, acquiring cached authentication vector information of the terminal, and authenticating the terminal based on the authentication vector information; and after the authentication is passed, returning an attach accept message to the terminal, wherein the attach accept message carries configuration information indicating that the terminal operates in the store-and-forward mode; and
if the attach request NAS message of the terminal is not cached and a feeder link is unavailable, caching the attach request NAS message and identification information of the terminal, and sending an attach reject message to the terminal, wherein the attach reject message carries a rejection reason, a waiting time and an available satellite ID list, and the rejection reason indicates that an attach procedure cannot be completed due to the store-and-forward mode; the identification information is one of an IMSI and a GUTI.

In an embodiment, after sending the attach reject message to the terminal, the method further comprises:
when the feeder link is available, forwarding the attach request NAS message and the identification information of the terminal to a terrestrial network element; and
receiving the authentication vector information of the terminal sent by the terrestrial network element, caching the authentication vector information of the terminal, and establishing a binding relationship among the authentication vector information, the attach request NAS message and the identification information of the terminal.

In an embodiment, the method further includes:
if the operating mode of the on board network element is indicated as a coexistence mode, determining a state of the feeder link;
if the feeder link is unavailable, determining whether the attach request NAS message of the terminal is cached; and
if the feeder link is available, acquiring an authentication vector from a terrestrial network element, authenticating the terminal, and after the authentication is passed, returning an attach accept message to the terminal, wherein the attach accept message carries configuration information indicating that the terminal operates in a normal operating mode.

In an embodiment, the method further includes:
after an attach complete message sent by the terminal is received, deleting the cached authentication vector information of the terminal, the cached attach request NAS message and the cached identification information of the terminal; and
sending an attach complete notification of the terminal to a terrestrial network element, wherein the attach complete notification is used for instructing the terrestrial network element to delete the authentication vector information of the terminal, the attach request NAS message and the identification information of the terminal.

In an embodiment, the first information further comprises a satellite ID.

A communication apparatus applied to a terminal comprises:
a first acquiring module configured to acquire first information sent by an on board network element, wherein the first information at least comprises an operating mode of the on board network element; and
a communication module configured to perform communication processing on the basis of a terminal capability and the first information, wherein the terminal capability indicates whether the terminal supports a store-and-forward mode.

In an embodiment, the operating mode of the on board network element at least comprises one of a normal operating mode, the store-and-forward mode and a coexistence mode.

In an embodiment, when the operating mode of the on board network element is indicated as the normal operating mode and/or the coexistence mode, the apparatus further comprises:
a second acquiring module configured to acquire second information, the second information comprising time information of a terminal servable by the on board network element.

In an embodiment, the time information of the terminal servable by the on board network element comprises a time range between a start time of the terminal servable by the on board network element and an end time of the terminal servable by the on board network element.

In an embodiment, the terminal capability indicates whether the terminal supports the store-and-forward mode.

In an embodiment, the communication module is configured to:
if the operating mode of the on board network element is indicated as the coexistence mode and the terminal supports the store-and-forward mode, send a connection request to the on board network element, the connection request carrying information indicating that the terminal supports the store-and-forward mode.

In an embodiment, the communication module is configured to:
if the operating mode of the on board network element is indicated as the coexistence mode and the terminal does not support the store-and-forward mode, determine according to the second information, and if a current time point belongs to the time range of the terminal servable by the on board network element, send a connection request to the on board network element.

In an embodiment, the communication module is configured to:
if the operating mode of the on board network element is indicated as the store-and-forward mode and the terminal supports the store-and-forward mode, send a connection request to the on board network element, the connection request carrying information indicating that the terminal supports the store-and-forward mode.

In an embodiment, the communication module is configured to:
if the operating mode of the on board network element is indicated as the store-and-forward mode and the terminal does not support the store-and-forward mode, not send a connection request to the on board network element.

In an embodiment, the communication module is configured to:
if the operating mode of the on board network element is indicated as the normal operating mode, determine according to the second information, and if a current time point belongs to the time range of the terminal servable by the on board network element, send a connection request to the on board network element.

In an embodiment, the connection request at least comprises one or more of an RRC connection request, an RRC connection resume request, and an RRC connection reestablishment request.

In an embodiment, the communication module is configured to:
if the operating mode of the on board network element is indicated as the coexistence mode and the terminal supports the store-and-forward mode, send an attach request NAS message to the on board network element, the attach request NAS message carrying information indicating that the terminal supports the store-and-forward mode.

In an embodiment, the communication module is configured to:
if the operating mode of the on board network element is indicated as the store-and-forward mode and the terminal supports the store-and-forward mode, send an attach request NAS message to the on board network element, the attach request NAS message carrying information indicating that the terminal supports the store-and-forward mode.

In an embodiment, the first information further comprises a satellite ID.

A communication apparatus applied to an on board network element comprises:
a first sending module configured to send first information to a terminal, wherein the first information at least comprises an operating mode of the on board network element, and is configured to enable the terminal to perform communication processing on the basis of a terminal capability and the first information.

In an embodiment, the operating mode of the on board network element at least comprises one of a normal operating mode, a store-and-forward mode and a coexistence mode.

In an embodiment, when the operating mode of the on board network element is indicated as the normal operating mode and/or the coexistence mode, the apparatus further comprises:
a second sending module configured to send second information to the terminal, the second information comprising time information of a terminal servable by the on board network element.

In an embodiment, the time information of the terminal servable by the on board network element comprises a time range between a start time of the terminal servable by the on board network element and an end time of the terminal servable by the on board network element.

In an embodiment, the time information of the terminal servable by the on board network element is calculated by the on board network element according to a satellite ephemeris and terrestrial gateway station information.

In an embodiment, the operating mode of the on board network element is configured by a preset strategy.

In an embodiment, the apparatus further includes:
a first receiving module configured to receive a connection request sent by the terminal.

In an embodiment, the apparatus further includes:
a first determining module configured to, if the operating mode of the on board network element is indicated as the coexistence mode and the received connection request contains information indicating that the terminal supports the store-and-forward mode, determine a state of a feeder link;
a third sending module configured to, if the feeder link is unavailable, send a first connection message to the terminal, wherein the first connection message carries configuration information indicating that the terminal operates in the store-and-forward mode; and
a fourth sending module configured to, if the feeder link is available, send a second connection message to the terminal, wherein the second connection message carries configuration information indicating that the terminal operates in the normal operating mode.

In an embodiment, the apparatus further includes:
a second determining module configured to, if the operating mode of the on board network element is indicated as the coexistence mode and the received connection request does not contain information indicating that the terminal supports the store-and-forward mode, determine a state of a feeder link;
a fifth sending module configured to, if the feeder link is unavailable, send a rejection message to the terminal, wherein the rejection message carries a rejection reason, and the rejection reason indicates that the feeder link is unavailable; and
a sixth sending module configured to, if the feeder link is available, send a connection message to the terminal.

In an embodiment, the apparatus further includes:
a seventh sending module configured to, if the operating mode of the on board network element is indicated as the store-and-forward mode and the received connection request contains indication information indicating that the terminal supports the store-and-forward mode, send a connection message to the terminal, wherein the connection message carries configuration information indicating that the terminal operates in the store-and-forward mode.

In an embodiment, the apparatus further includes:
a third determining module configured to, if the operating mode of the on board network element is indicated as the normal operating mode and a connection message sent by the terminal is received, determine a state of a feeder link;
an eighth sending module configured to, if the feeder link is unavailable, send a rejection message to the terminal, wherein the rejection message contains a rejection reason, and the rejection reason indicates that the feeder link is unavailable; and
a ninth sending module configured to, if the feeder link is available, send a connection message to the terminal.

In an embodiment, the connection request at least comprises one or more of an RRC connection request, an RRC connection resume request, and an RRC connection reestablishment request;
when the connection request is the RRC connection request, the connection message is an RRC connection setup message, and the rejection message is an RRC connection reject message;
when the connection request is the RRC connection resume request, the connection message is an RRC connection resume message, and the rejection message is an RRC connection resume reject message; and
when the connection request is the RRC connection reestablishment request, the connection message is an RRC connection reestablishment message, and the rejection message is an RRC connection reestablishment reject message.

In an embodiment, the apparatus further includes:
a second receiving module configured to receive an attach request NAS message sent by the terminal, wherein the attach request NAS message carries information indicating that the terminal supports a store-and-forward mode.

In an embodiment, the second receiving module is further configured to:
determine whether the attach request NAS message of the terminal is cached;
if the attach request NAS message of the terminal is cached, acquire cached authentication vector information of the terminal, and authenticate the terminal based on the authentication vector information; and after the authentication is passed, return an attach accept message to the terminal, the attach accept message carrying configuration information indicating that the terminal operates in the store-and-forward mode; and
if the attach request NAS message of the terminal is not cached and a feeder link is unavailable, cache the attach request NAS message and identification information of the terminal, and send an attach reject message to the terminal, the attach reject message carrying a rejection reason, a waiting time and an available satellite ID list, and the rejection reason indicating that an attach procedure cannot be completed due to the store-and-forward mode; the identification information being one of an IMSI and a GUTI.

In an embodiment, the second receiving module is further configured to:
when the feeder link is available, forward the attach request NAS message and the identification information of the terminal to a terrestrial network element; and
receive the authentication vector information of the terminal sent by the terrestrial network element, cache the authentication vector information of the terminal, and establish a binding relationship among the authentication vector information, the attach request NAS message and the identification information of the terminal.

In an embodiment, the second receiving module is further configured to:
if the operating mode of the on board network element is indicated as a coexistence mode, determine a state of the feeder link;
if the feeder link is unavailable, determine whether the attach request NAS message of the terminal is cached; and
if the feeder link is available, acquire an authentication vector from a terrestrial network element, authenticate the terminal, and after the authentication is passed, return an attach accept message to the terminal, the attach accept message carrying configuration information indicating that the terminal operates in a normal operating mode.

In an embodiment, the second receiving module is further configured to:
after an attach complete message sent by the terminal is received, delete the cached authentication vector information of the terminal, the cached attach request NAS message and the cached identification information of the terminal; and
send an attach complete notification of the terminal to a terrestrial network element, the attach complete notification being used for instructing the terrestrial network element to delete the authentication vector information of the terminal, the attach request NAS message and the identification information of the terminal.

In an embodiment, the first information further comprises a satellite ID.

A communication system comprises a terminal and an on board network element,
wherein the on board network element is configured to send first information to the terminal, the first information at least comprising an operating mode of the on board network element; and
the terminal is configured to acquire the first information sent by the on board network element and perform communication processing according to a terminal capability and the first information.

A communication device comprises a receiver and a processor;
wherein the receiver is configured to acquire first information sent by an on board network element, the first information at least comprising an operating mode of the on board network element; and
the processor is configured to perform communication processing according to a terminal capability and the first information.

A communication device comprises a transmitter;
wherein the transmitter is configured to send first information to a terminal, wherein the first information at least comprises an operating mode of an on board network element, and is configured to enable the terminal to perform communication processing on the basis of a terminal capability and the first information.

A computer-readable storage medium has a computer program stored thereon, wherein the computer program, when executed by a processor, implements the steps of the communication methods according to the embodiments of the present application.

A computer program product includes a computer program, wherein the computer program, when executed by a processor, implements the steps of the communication methods according to the embodiments of the present application.

The communication methods and apparatuses, the communication devices, the storage medium, and the computer program product can be applied to the terminal, the terminal can acquire the first information sent by the on board network element, the first information at least comprises the operating mode of the on board network element, and then, the communication processing is performed according to the terminal capability and the first information. In this solution, the terminal can learn the operating mode of the on board network element and perform the communication processing in conjunction with the operating mode of the on board network element and the capability of the terminal, so that the cooperation between the terminal and the network can be effectively realized when both the terminal and the on board network element support the plurality of operating modes, thereby improving the communication reliability.

### BRIEF DESCRIPTION OF THE DRAWINGS

In order to illustrate the technical solutions in the embodiments of the present application or the related art more clearly, the drawings required for describing the embodiments or the related art will be described briefly. Apparently, the following described drawings are merely for some embodiments of the present application, and other drawings can be derived from these drawings by those of ordinary skill in the art without any creative effort.
FIG. 1 is a view of an application scenario of communication methods according to embodiments of the present application.
FIG. 2 is a schematic flow diagram of a communication method according to an embodiment of the present application.
FIG. 3 is a schematic flow diagram of a communication method according to another embodiment of the present application.
FIG. 4 is a schematic flow diagram of a communication method when an on board network element is in a coexistence mode and a terminal supports a store-and-forward mode according to an embodiment of the present application.
FIG. 5 is a schematic flow diagram of a communication method when the on board network element is in the coexistence mode and the terminal does not support the store-and-forward mode according to an embodiment of the present application.
FIG. 6 is a schematic flow diagram of a communication method when the on board network element is in the store-and-forward mode and the terminal supports the store-and-forward mode according to an embodiment of the present application.
FIG. 7 is a schematic flow diagram of a communication method when the on board network element is in a normal operating mode according to an embodiment of the present application.
FIG. 8 is a schematic flow diagram of another communication method when the on board network element is in the store-and-forward mode and the terminal supports the store-and-forward mode according to an embodiment of the present application.
FIG. 9 is a structural block diagram of a communication apparatus according to an embodiment of the present application.
FIG. 10 is a structural block diagram of a communication apparatus according to another embodiment of the present application.
FIG. 11 is an internal structure diagram of a terminal device according to an embodiment of the present application.
FIG. 12 is an internal structure diagram of an on board network element according to an embodiment of the present application.

### DETAILED DESCRIPTION

The present application will be described in further detail below with reference to the accompanying drawings and embodiments in order to make the objects, technical solutions, and advantages of the present application more clear. It should be understood that the specific embodiments described herein are only for explaining the present application, and not intended to limit the present application.

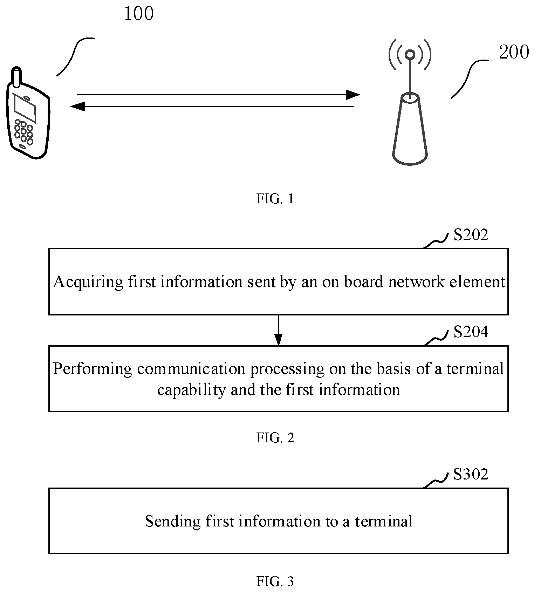

FIG. 1 is a schematic diagram of an application scenario of communication methods according to embodiments of the present application. As shown in FIG. 1, the scenario comprises a terminal 100 and an on board network element 200. The terminal 100 and the on board network element 200 may communicate with each other through a communication link.

The terminal 100 may be a wireless terminal which may be a device providing voice and/or other service data connectivity for a user, a handheld device having a wireless connection function, or other processing devices connected to a wireless modem. The wireless terminal may communicate with one or more core networks via a radio access network (RAN), and the wireless terminal may be a mobile terminal such as a mobile telephone (or "cellular" telephone) and a computer having a mobile terminal, e.g., a portable, pocket, handheld, computer-built-in or vehicle-mounted mobile apparatus, and may exchange languages and/or data with the RAN. The wireless terminal may also be a system, a subscriber unit, a subscriber station, a mobile station, a mobile, a remote station, a remote terminal, an access terminal, a user terminal, a user agent, a user device or user equipment or other Internet of Things devices, and is not limited herein.

In a regenerative mode, in order to improve the communication service capability of an IoT-NTN, an on board network element may have the capability of storing and forwarding messages. That is, when a service link is available and a feeder link is unavailable, the on board network element can communicate with a terminal, receive a message sent by the terminal in a coverage range, cache the message, and forward a cached message from a terrestrial network to the terminal. When the feeder link is available and the service link is unavailable, the on board network element can communicate with the terrestrial network through a gateway station, transmit the message cached on the on board network element and sent by the terminal back to the ground, receive the message sent to the terminal by the terrestrial network, and cache the message.

In the traditional technology, each of the on board network element and the terminal has multiple operating modes, and therefore, how to enable the terminal to communicate through the on board network element in the multiple operating modes is a technical problem to be solved urgently. In order to solve the technical problem in the traditional technology, embodiments of the present application provide communication methods, by which the terminal can perform communication processing in conjunction with the operating mode of the on board network element and the capability of the terminal, so that the cooperation between the terminal and the network can be effectively realized when both the terminal and the on board network element support the plurality of operating modes, thereby improving the communication reliability.

It should be noted that the beneficial effect or the technical problem to be solved by the embodiments of the present application is not limited thereto, and may be other implicit or associated beneficial effects or problems, and reference may be made to the descriptions of the following embodiments for details.

The technical solution of the present application and a way to solve the above technical problem by the technical solution of the present application are described in detail below by specific embodiments. The following several specific embodiments may be combined with each other, and same or similar concepts or processes may not be repeated in some embodiments. The embodiments of the present application will be described below with reference to the accompanying drawings.

In an embodiment, as shown in FIG. 2, a communication method is provided, the description is given with the method applied to the terminal device in FIG. 1 as an example, and the method includes the following steps S202 to S204.

Step S202: acquiring first information sent by an on board network element.

The first information at least comprises an operating mode of the on board network element.

In the embodiment of the present application, the on board network element may send the first information in a broadcasting manner, and the first information may comprise the operating mode of the on board network element. The operating mode of the on board network element at least comprises one of a normal operating mode (i.e., a transparent transmission mode), a store-and-forward mode and a coexistence mode (that is, the normal operating mode and the store-and-forward mode exist at the same time). In an implementation, the first information may be carried by a system information block (SIB)1 message. For example, the on board network element may add identification information corresponding to the current operating mode in the SIB1 message according to the operating mode, and then broadcast the SIB1 message. The terminal may monitor the SIB1 message and parse the SIB1 message to obtain the first information.

In an embodiment, the on board network element may be an eNodeB, or the on board network element may comprise an eNodeB and a mobility management entity (MME), and the embodiment of the present application may be performed by the eNodeB comprised in the on board network element.

Step S204: performing communication processing on the basis of a terminal capability and the first information.

In the embodiment of the present application, after acquiring the operating mode of the on board network element, the terminal can perform the communication processing on the basis of the terminal capability and the operating mode of the on board network element. For example, the terminal may determine whether to initiate a connection with the on board network element. The terminal capability specifically indicates whether the terminal supports the store-and-forward mode.

In this embodiment, the terminal can learn the operating mode of the on board network element and perform the communication processing in conjunction with the operating mode of the on board network element and the capability of the terminal, so that the cooperation between the terminal and a network can be effectively realized when both the terminal and the on board network element support a plurality of operating modes, thereby improving the communication reliability.

In an embodiment, when the operating mode of the on board network element is indicated as the normal operating mode and/or the coexistence mode, the method further comprises: acquiring second information, the second information comprising time information of a terminal servable by the on board network element.

In the embodiment of the present application, the on board network element may further broadcast the second information, and the second information may comprise the time information of the terminal servable by the on board network element. The second information may be carried by an SIB message. Optionally, the first information and the second information may be carried by different SIB messages. After the terminal acquires the operating mode of the on board network element, if the operating mode of the on board network element is indicated as the normal operating mode and/or the coexistence mode, the terminal can monitor the second information and parse the second information to obtain the time information of the terminal servable by the on board network element. The terminal servable by the on board network element refers to a terminal for which the on board network element can provide a communication service, i.e., a terminal in the coverage range of the on board network element, and the number of the terminals can be one or more.

In an embodiment, the time information of the terminal servable by the on board network element comprises a start time of the terminal servable by the on board network element and an end time of the terminal servable by the on board network element, that is, the time information comprises a time range.

In this embodiment, when the on board network element operates in the normal operating mode and/or the coexistence mode, the terminal can also acquire the time information of the terminal servable by the on board network element to communicate with the on board network element within the time range, thus improving the communication success rate.

In an embodiment, the step of performing communication processing on the basis of a terminal capability and the first information may comprise: if the operating mode of the on board network element is indicated as the coexistence mode and the terminal supports the store-and-forward mode, sending a connection request to the on board network element, the connection request carrying information indicating that the terminal supports the store-and-forward mode.

In the embodiment of the present application, after the terminal acquires the operating mode of the on board network element, if the operating mode of the on board network element is indicated as the coexistence mode, the terminal can determine whether the terminal capability supports the store-and-forward mode, and if yes, the terminal sends the connection request to the on board network element, the connection request carrying the information indicating that the terminal supports the store-and-forward mode.

In this embodiment, when the operating mode of the on board network element is indicated as the coexistence mode and the terminal supports the store-and-forward mode, the terminal may directly send the connection request to the on board network element, so as to communicate with the on board network element.

In an embodiment, the step of performing communication processing on the basis of a terminal capability and the first information may comprise: if the operating mode of the on board network element is indicated as the coexistence mode and the terminal does not support the store-and-forward mode, determining whether to send a connection request according to the second information, and if a current time point belongs to the time range of the terminal servable by the on board network element, sending a connection request to the on board network element.

In the embodiment of the present application, after the terminal acquires the operating mode of the on board network element, if the operating mode of the on board network element is indicated as the coexistence mode, the terminal can determine whether the terminal capability supports the store-and-forward mode, if no, the terminal determines whether the current time point belongs to the time range of the terminal servable by the on board network element according to the time information of the terminal servable by the on board network element in the acquired second information, and if yes, the terminal sends the connection request to the on board network element. The connection request may not carry information indicating that the terminal supports the store-and-forward mode; alternatively, the connection request may carry information indicating that the terminal does not support the store-and-forward mode. If no, the terminal does not send the connection request.

In this embodiment, a cooperative operating mode in the case where the operating mode of the on board network element is indicated as the coexistence mode and the terminal does not support the store-and-forward mode is provided, thus guaranteeing reliability of communication between the terminal and the on board network element.

In an embodiment, the step of performing communication processing on the basis of a terminal capability and the first information may comprise: if the operating mode of the on board network element is indicated as the store-and-forward mode and the terminal supports the store-and-forward mode, sending a connection request to the on board network element, the connection request carrying information indicating that the terminal supports the store-and-forward mode.

In the embodiment of the present application, after the terminal acquires the operating mode of the on board network element, if the operating mode of the on board network element is indicated as the store-and-forward mode, the terminal can determine whether the terminal capability supports the store-and-forward mode, and if yes, the terminal sends the connection request to the on board network element, the connection request carrying the information indicating that the terminal supports the store-and-forward mode.

In this embodiment, when the operating mode of the on board network element is indicated as the store-and-forward mode and the terminal supports the store-and-forward mode, the terminal may directly send the connection request to the on board network element, so as to communicate with the on board network element.

In an embodiment, the step of performing communication processing on the basis of a terminal capability and the first information may comprise: if the operating mode of the on board network element is indicated as the store-and-forward mode and the terminal does not support the store-and-forward mode, not sending a connection request to the on board network element.

In the embodiment of the present application, after the terminal acquires the operating mode of the on board network element, if the operating mode of the on board network element is indicated as the store-and-forward mode, the terminal can determine whether the terminal capability supports the store-and-forward mode, if no, the terminal cannot communicate with the on board network element, and the terminal does not send the connection request to the on board network element.

In this embodiment, a cooperative operating mode in the case where the operating mode of the on board network element is indicated as the store-and-forward mode and the terminal does not support the store-and-forward mode is provided, thus saving communication resources and power consumption of the terminal.

In an embodiment, the step of performing communication processing on the basis of a terminal capability and the first information may comprise: if the operating mode of the on board network element is indicated as the normal operating mode, determining whether to send a connection request according to the second information, and if a current time point belongs to the time range of the terminal servable by the on board network element, sending a connection request to the on board network element.

In the embodiment of the present application, after the terminal acquires the operating mode of the on board network element, if the operating mode of the on board network element is indicated as the normal operating mode, the terminal determines whether the current time point belongs to the time range of the terminal servable by the on board network element according to the time information of the terminal servable by the on board network element in the acquired second information, and if yes, the terminal sends the connection request to the on board network element. The connection request may not carry information indicating that the terminal supports the store-and-forward mode. If no, the terminal does not send the connection request.

In this embodiment, a cooperative operating mode in the case where the operating mode of the on board network element is indicated as the normal operating mode, thus ensuring normal communication between the terminal and the on board network element.

In an embodiment of the present application, the connection request at least comprises one or more of a radio resource control (RRC) connection request, an RRC connection resume request, and an RRC connection reestablishment request, which is not limited in the present application.

In an embodiment, the first information further comprises a satellite identity (ID).

In an embodiment, the step of performing communication processing on the basis of a terminal capability and the first information may comprise: if the operating mode of the on board network element is indicated as the coexistence mode and the terminal supports the store-and-forward mode, sending an attach request non-access stratum (NAS) message to the on board network element, the attach request NAS message carrying information indicating that the terminal supports the store-and-forward mode.

In the embodiment of the present application, the on board network element comprises an eNodeB and an MME. If the operating mode of the on board network element is indicated as the coexistence mode and the terminal supports the store-and-forward mode, the terminal may send an RRC connection setup complete message to the eNodeB in the on board network element, the RRC connection setup complete message containing the attach request NAS message, and the attach request NAS message carrying the information indicating that the terminal supports the store-and-forward mode. After receiving the RRC connection setup complete message, the eNodeB forwards the attach request NAS message to the MME through an initial UE message.

In this embodiment, indication information indicating that the terminal supports the store-and-forward mode can be sent to the on board MME through the attach request NAS message, so as to complete the communication processing.

In an embodiment, the step of performing communication processing on the basis of a terminal capability and the first information may comprise: if the operating mode of the on board network element is indicated as the store-and-forward mode and the terminal supports the store-and-forward mode, sending an attach request NAS message to the on board network element, the attach request NAS message carrying information indicating that the terminal supports the store-and-forward mode.

In the embodiment of the present application, the on board network element comprises an eNodeB and an MME. If the operating mode of the on board network element is indicated as the store-and-forward mode and the terminal supports the store-and-forward mode, the terminal may send an RRC connection setup complete message to the eNodeB in the on board network element, the RRC connection setup complete message containing the attach request NAS message, and the attach request NAS message carrying the information indicating that the terminal supports the store-and-forward mode. After receiving the RRC connection setup complete message, the eNodeB forwards the attach request NAS message to the MME through an initial UE message.

In this embodiment, indication information indicating that the terminal supports the store-and-forward mode can be sent to the on board MME through the attach request NAS message, so as to complete the communication processing.

In an embodiment, as shown in FIG. 3, a communication method is provided, the description is given with the method applied to the on board network element in FIG. 1 as an example, and the method includes the following steps.

Step S302: sending first information to a terminal.

The first information at least comprises an operating mode of the on board network element, and is configured to enable the terminal to perform communication processing on the basis of a terminal capability and the first information.

In the embodiment of the present application, the on board network element may send the first information in a broadcasting manner, and the first information may comprise the operating mode of the on board network element. The operating mode of the on board network element at least comprises one of a normal operating mode, a store-and-forward mode and a coexistence mode. In an implementation, the first information may be carried by an SIB1 message. For example, the on board network element may add identification information corresponding to the current operating mode in the SIB1 message according to the operating mode, and then broadcast the SIB1 message. The terminal may monitor the SIB1 message and parse the SIB1 message to obtain the first information. After acquiring the operating mode of the on board network element, the terminal can perform the communication processing on the basis of the terminal capability and the operating mode of the on board network element. For example, the terminal may determine whether to initiate a connection with the on board network element. The terminal capability specifically indicates whether the terminal supports the store-and-forward mode.

In an embodiment, the on board network element may be an eNodeB, or the on board network element may comprise an eNodeB and an MME, and the embodiment of the present application may be performed by the eNodeB comprised in the on board network element.

In this embodiment, the terminal can learn the operating mode of the on board network element and perform the communication processing in conjunction with the operating mode of the on board network element and the capability of the terminal, so that the cooperation between the terminal and a network can be effectively realized when both the terminal and the on board network element support a plurality of operating modes, thereby improving the communication reliability.

In an embodiment, when the operating mode of the on board network element is indicated as the normal operating mode and/or the coexistence mode, the method further comprises: sending second information to the terminal, the second information comprising time information of a terminal servable by the on board network element.

In the embodiment of the present application, when the on board network element operates in the normal operating mode and/or the coexistence mode, the on board network element may further broadcast the second information. The second information may comprise the time information of the terminal servable by the on board network element. The second information may be carried by an SIB message. In an embodiment, the first information and the second information may be carried by different SIB messages. After the terminal acquires the operating mode of the on board network element, if the operating mode of the on board network element is indicated as the normal operating mode and/or the coexistence mode, the terminal can monitor the second information and parse the second information to obtain the time information of the terminal servable by the on board network element. The terminal servable by the on board network element is a terminal for which the on board network element can provide a communication service, i.e., a terminal in the coverage range of the on board network element, and the number of the terminals can be one or more.

In this embodiment, when the on board network element operates in the normal operating mode and/or the coexistence mode, the on board network element may broadcast the time information of the terminal servable by the on board network element, so that the terminal communicates with the on board network element within the time, thereby improving the communication success rate.

In an embodiment, the time information of the terminal servable by the on board network element comprises a start time of the terminal servable by the on board network element and an end time of the terminal servable by the on board network element. That is, the time information comprises a time range.

In an embodiment, the time information of the terminal servable by the on board network element is calculated by the on board network element according to a satellite ephemeris and terrestrial gateway station information.

In an embodiment, the operating mode of the on board network element is configured by a preset strategy. The preset strategy may be configured by a technician, and the specific content of the preset strategy is not limited in the embodiment of the present application. The on board network element can switch between different operating modes according to the preset strategy in the operating process.

In an embodiment, the method further comprises: receiving a connection request sent by the terminal.

In the embodiment of the present application, if the terminal determines that the terminal can communicate with the on board network element, the terminal can send the connection request to the on board network element. The connection request may be an RRC connection request, and/or an RRC connection resume request, and/or an RRC connection reestablishment request. Therefore, the terminal can establish a connection with the on board network element in different scenarios, and then communicate with the on board network element. The on board network element may receive the connection request sent by the terminal, and may process the connection request according to the current operating mode and the connection request.

In an embodiment, the method further comprises: if the operating mode of the on board network element is indicated as the coexistence mode and the received connection request contains information indicating that the terminal supports the store-and-forward mode, determining a state of a feeder link: if the feeder link is unavailable, sending a first connection message to the terminal, wherein the first connection message carries configuration information indicating that the terminal operates in the store-and-forward mode; and if the feeder link is available, sending a second connection message to the terminal, wherein the second connection message carries configuration information indicating that the terminal operates in the normal operating mode.

In the embodiment of the present application, after receiving the connection request sent by the terminal, the on board network element can parse the connection request. If the operating mode of the on board network element is indicated as the coexistence mode and the received connection request contains the information indicating that the terminal supports the store-and-forward mode, the on board network element determines the state of the feeder link. If the feeder link is unavailable, the on board network element sends the first connection message to the terminal, the first connection message carrying the configuration information indicating that the terminal operates in the store-and-forward mode. In this way, the terminal can perform message transmission by using the store-and-forward mode even if the feeder link is unavailable. If the feeder link is available, the on board network element sends the second connection message to the terminal, the second connection message carrying the configuration information indicating that the terminal operates in the normal operating mode. Therefore, under the condition that the feeder link is available, the terminal only needs to perform information transmission by using the normal operating mode, thus saving processing resources of the terminal.

In an example, after the on board network element receives the RRC connection request sent by the terminal, if the operating mode of the on board network element is indicated as the coexistence mode and the received RRC connection request contains information indicating that the terminal supports the store-and-forward mode, the on board network element determines a state of a feeder link. If the feeder link is unavailable, the on board network element sends a first RRC connection setup message to the terminal, the first RRC connection setup message carrying configuration information indicating that the terminal operates in the store-and-forward mode; and if the feeder link is available, the on board network element sends a second RRC connection setup message to the terminal, the second RRC connection setup message carrying configuration information indicating that the terminal operates in the normal operating mode.

In another example, after the on board network element receives the RRC connection resume request sent by the terminal, if the operating mode of the on board network element is indicated as the coexistence mode and the received RRC connection resume request contains information indicating that the terminal supports the store-and-forward mode, the on board network element determines a state of a feeder link. If the feeder link is unavailable, the on board network element sends a first RRC connection resume message to the terminal, the first RRC connection resume message carrying configuration information indicating that the terminal operates in the store-and-forward mode; and if the feeder link is available, the on board network element sends a second RRC connection resume message to the terminal, the second RRC connection resume message carrying configuration information indicating that the terminal operates in the normal operating mode.

In another example, after the on board network element receives the RRC connection reestablishment request sent by the terminal, if the operating mode of the on board network element is indicated as the coexistence mode and the received RRC connection reestablishment request contains information indicating that the terminal supports the store-and-forward mode, the on board network element determines a state of a feeder link. If the feeder link is unavailable, the on board network element sends a first RRC connection reestablishment request to the terminal, the first RRC connection reestablishment request carrying configuration information indicating that the terminal operates in the store-and-forward mode; and if the feeder link is available, the on board network element sends a second RRC connection reestablishment request to the terminal, the second RRC connection reestablishment request carrying configuration information indicating that the terminal operates in the normal operating mode.

In this embodiment, when the operating mode of the on board network element is indicated as the coexistence mode, the cooperation between the terminal and the network may be implemented, thereby improving the communication reliability.

In an embodiment, the method further comprises: if the operating mode of the on board network element is indicated as the coexistence mode and the received connection request does not contain information indicating that the terminal supports the store-and-forward mode, determining a state of a feeder link: if the feeder link is unavailable, sending a rejection message to the terminal, wherein the rejection message carries a rejection reason, and the rejection reason indicates that the feeder link is unavailable; and if the feeder link is available, sending a connection message to the terminal.

In the embodiment of the present application, after receiving the connection request sent by the terminal, the on board network element can parse the connection request. If the operating mode of the on board network element is indicated as the coexistence mode and the received connection request does not contain the information indicating that the terminal supports the store-and-forward mode, the on board network element may further determine the state of the feeder link. If the feeder link is unavailable, the on board network element sends the rejection message to the terminal, the rejection message carrying the rejection reason, and the rejection reason indicating that the feeder link is unavailable. If the feeder link is available, the on board network element sends the connection message to the terminal to establish a connection with the terminal.

In an example, after the on board network element receives the RRC connection request sent by the terminal, if the operating mode of the on board network element is indicated as the coexistence mode and the received RRC connection request does not contain information indicating that the terminal supports the store-and-forward mode, the on board network element determines a state of a feeder link: if the feeder link is unavailable, the on board network element sends an RRC connection reject message to the terminal, the RRC connection reject message carrying a rejection reason, and the rejection reason indicating that the feeder link is unavailable; and if the feeder link is available, the on board network element sends an RRC connection setup message to the terminal.

In another example, after the on board network element receives the RRC connection resume request sent by the terminal, if the operating mode of the on board network element is indicated as the coexistence mode and the received RRC connection resume request does not contain information indicating that the terminal supports the store-and-forward mode, the on board network element determines a state of a feeder link: if the feeder link is unavailable, the on board network element sends an RRC connection resume reject message to the terminal, the RRC connection resume reject message carrying a rejection reason, and the rejection reason indicating that the feeder link is unavailable; and if the feeder link is available, the on board network element sends an RRC connection resume message to the terminal.

In another example, after the on board network element receives the RRC connection reestablishment request sent by the terminal, if the operating mode of the on board network element is indicated as the coexistence mode and the received RRC connection reestablishment request does not contain information indicating that the terminal supports the store-and-forward mode, the on board network element determines a state of a feeder link: if the feeder link is unavailable, the on board network element sends an RRC connection reestablishment reject message to the terminal, the RRC connection reestablishment reject message carrying a rejection reason, and the rejection reason indicating that the feeder link is unavailable; and if the feeder link is available, the on board network element sends an RRC connection reestablishment message to the terminal.

In this embodiment, when the operating mode of the on board network element is indicated as the coexistence mode, the cooperation between the terminal and the network may be implemented, thereby improving the communication reliability.

In an embodiment, the method further comprises: if the operating mode of the on board network element is indicated as the store-and-forward mode and the received connection request contains indication information indicating that the terminal supports the store-and-forward mode, sending a connection message to the terminal, wherein the connection message carries configuration information indicating that the terminal operates in the store-and-forward mode.

In the embodiment of the present application, after receiving the connection request sent by the terminal, the on board network element can parse the connection request. If the operating mode of the on board network element is indicated as the store-and-forward mode and the received connection request contains the indication information indicating that the terminal supports the store-and-forward mode, the on board network element sends the connection message to the terminal, the connection message carrying the configuration information indicating that the terminal operates in the store-and-forward mode.

In an example, after the on board network element receives the RRC connection request sent by the terminal, if the operating mode of the on board network element is indicated as the store-and-forward mode and the received RRC connection request contains indication information indicating that the terminal supports the store-and-forward mode, the on board network element sends an RRC connection setup message to the terminal, the RRC connection setup message carrying configuration information indicating that the terminal operates in the store-and-forward mode.

In another example, after the on board network element receives the RRC connection resume request sent by the terminal, if the operating mode of the on board network element is indicated as the store-and-forward mode and the received RRC connection resume request contains indication information indicating that the terminal supports the store-and-forward mode, the on board network element sends an RRC connection resume message to the terminal, the RRC connection resume message carrying configuration information indicating that the terminal operates in the store-and-forward mode.

In another example, after the on board network element receives the RRC connection reestablishment request sent by the terminal, if the operating mode of the on board network element is indicated as the store-and-forward mode and the received RRC connection reestablishment request contains indication information indicating that the terminal supports the store-and-forward mode, the on board network element sends an RRC connection reestablishment message to the terminal, the RRC connection reestablishment message carrying configuration information indicating that the terminal operates in the store-and-forward mode.

In the above embodiment, when the operating mode of the on board network element is indicated as the store-and-forward mode, the cooperation between the terminal and the network may be implemented, thereby improving the communication reliability.

In an embodiment, the method further comprises: if the operating mode of the on board network element is indicated as the normal operating mode and a connection message sent by the terminal is received, determining a state of a feeder link: if the feeder link is unavailable, sending a rejection message to the terminal, wherein the rejection message contains a rejection reason, and the rejection reason indicates that the feeder link is unavailable; and if the feeder link is available, sending a connection message to the terminal.

In the embodiment of the present application, if the operating mode of the on board network element is indicated as the normal operating mode and the on board network element receives the connection message sent by the terminal, the on board network element can further determine the state of the feeder link. If the feeder link is unavailable, the on board network element sends the rejection message to the terminal, the rejection message containing the rejection reason, and the rejection reason indicating that the feeder link is unavailable; if the feeder link is available, the on board network element sends the connection message to the terminal.

In an example, if the operating mode of the on board network element is indicated as the normal operating mode and the RRC connection request sent by the terminal is received, a state of a feeder link is determined; if the feeder link is unavailable, an RRC connection reject message is sent to the terminal, the RRC connection reject message containing a rejection reason, and the rejection reason indicating that the feeder link is unavailable; and if the feeder link is available, an RRC connection setup message is sent to the terminal.

In another example, if the operating mode of the on board network element is indicated as the normal operating mode and the RRC connection resume request sent by the terminal is received, a state of a feeder link is determined; if the feeder link is unavailable, an RRC connection resume reject message is sent to the terminal, the RRC connection resume reject message containing a rejection reason, and the rejection reason indicating that the feeder link is unavailable; and if the feeder link is available, an RRC connection resume message is sent to the terminal.

In another example, if the operating mode of the on board network element is indicated as the normal operating mode and the RRC connection reestablishment request sent by the terminal is received, a state of a feeder link is determined; if the feeder link is unavailable, an RRC connection reestablishment reject message is sent to the terminal, the RRC connection reestablishment reject message containing a rejection reason, and the rejection reason indicating that the feeder link is unavailable; and if the feeder link is available, an RRC connection reestablishment message is sent to the terminal.

In the above embodiment, when the operating mode of the on board network element is indicated as the normal operating mode, the cooperation between the terminal and the network may be implemented, thereby improving the communication reliability.

In an embodiment, the connection request at least comprises one or more of the RRC connection request, the RRC connection resume request, and the RRC connection reestablishment request. Specifically, when the connection request is the RRC connection request, the connection message is the RRC connection setup message, and the rejection message is the RRC connection reject message; when the connection request is the RRC connection resume request, the connection message is the RRC connection resume message, and the rejection message is the RRC connection resume reject message; and when the connection request is the RRC connection reestablishment request, the connection message is the RRC connection reestablishment message, and the rejection message is the RRC connection reestablishment reject message.

In an embodiment, the first information further comprises a satellite ID.

In an embodiment, the method further comprises: receiving an attach request NAS message sent by the terminal, wherein the attach request NAS message carries information indicating that the terminal supports a store-and-forward mode.

In the embodiment of the present application, the terminal may send an RRC connection setup complete message to the eNodeB in the on board network element, the RRC connection setup complete message containing the attach request NAS message, and the attach request NAS message carrying the information indicating that the terminal supports the store-and-forward mode. After receiving the RRC connection setup complete message, the eNodeB forwards the attach request NAS message to the MME through an initial UE message.

In the above embodiment, indication information indicating that the terminal supports the store-and-forward mode can be sent to the on board MME through the attach request NAS message, so as to complete the communication processing.

In an embodiment, the method further comprises: determining whether the attach request NAS message of the terminal is cached; if the attach request NAS message of the terminal is cached, acquiring cached authentication vector information of the terminal, and authenticating the terminal based on the authentication vector information; and if the attach request NAS message of the terminal is not cached and a feeder link is unavailable, caching the attach request NAS message and identification information of the terminal, and sending an attach reject message to the terminal, wherein the attach reject message carries a rejection reason, a waiting time and an available satellite ID list, and the rejection reason indicates that an attach procedure cannot be completed due to the store-and-forward mode; the identification information is one of an international mobile subscriber identity (IMSI) and a globally unique temporary identity (GUTI).

In the embodiment of the present application, after receiving the attach request NAS message, the MME can determine whether the attach request NAS message of the terminal is cached locally. If the attach request NAS message of the terminal is cached, the cached authentication vector information of the terminal is acquired, identity authentication and key agreement (AKA) authentication is performed on the terminal based on the authentication vector information, and an attach accept message is returned to the terminal after the authentication is passed, the attach accept message carrying configuration information indicating that the terminal operates in the store-and-forward mode. If the MME does not cache the attach request NAS message of the terminal and the feeder link is unavailable, the attach request NAS message and the identification information of the terminal are cached. The identification information of the terminal may be one of the IMSI and the GUTI. The MME may also send the attach reject message to the eNodeB, the attach reject message carrying the rejection reason, the waiting time and the available satellite ID list, and the rejection reason indicating that the attach procedure cannot be completed due to the store-and-forward mode. In an embodiment, the MME may also cache a request time of the attach request NAS message. The eNodeB forwards the attach reject message to the terminal. After receiving the attach reject message, the terminal starts a timer, receives an SIB message of an available satellite after the waiting time expires if the service link is available, and then sends the attach request NAS message to the eNodeB of the on board network element again, the attach request NAS message carrying the information indicating that the terminal supports the store-and-forward mode.

In the above embodiment, a manner of processing of the attach request NAS message by the on board MME is provided, so that the terminal can perform communication normally.

In an embodiment, after sending the attach reject message to the terminal, the method further comprises: when the feeder link is available, forwarding the attach request NAS message and the identification information of the terminal to a terrestrial network element; and receiving the authentication vector information of the terminal sent by the terrestrial network element, caching the authentication vector information of the terminal, and establishing a binding relationship among the authentication vector information, the attach request NAS message and the identification information of the terminal.

In the embodiment of the present application, after the on board network element sends the attach reject message to the terminal, the on board network element (for example, the on board MME) may forward the identification information of the terminal and the attach request NAS message to the terrestrial network element when detecting that the feeder link is available. In an embodiment, the request time of the attach request NAS message may also be forwarded to the terrestrial network element. The terrestrial network element may be a terrestrial MME. After receiving the information sent by the on board MME, the terrestrial network element may obtain an authentication vector of the terminal, and then synchronize information such as the authentication vector information of the terminal, the attach request NAS message, the request time of the attach request NAS message, and the identification information of the terminal to the on board network element that covers the region where the terminal is located next time. After receiving the authentication vector information sent by the terrestrial MME, the on board MME caches the authentication vector information of the terminal and establishes the binding relationship among the authentication vector information, the attach request NAS message and the identification information of the terminal. In an embodiment, the binding relationship may further contain the request time of the attach request NAS message.

In an embodiment, the terrestrial network element may synchronize the information such as the identification information of the terminal, the attach request NAS message, the authentication vector information, and the request time to other available on board network elements when the feeder links of the other on board network elements are available.

In this way, after the on board MME receives the attach request NAS message retransmitted by the terminal, the on board MME can determine again whether the attach request NAS message of the terminal is cached. If the attach request NAS message of the terminal is cached, the cached authentication vector information of the terminal is acquired, and the terminal is authenticated based on the authentication vector information; if the attach request NAS message of the terminal is not cached, the attach request NAS message and the identification information of the terminal are cached, and the attach reject message is sent to the terminal, the attach reject message carrying the rejection reason, the waiting time and the available satellite ID list, and the rejection reason indicating that the attach procedure cannot be completed due to the store-and-forward mode.

In an embodiment, the method further comprises: if the operating mode of the on board network element is indicated as a coexistence mode, determining a state of the feeder link; if the feeder link is unavailable, determining whether an attach request NAS message of the terminal is cached; and if the feeder link is available, acquiring an authentication vector from a terrestrial network element, authenticating the terminal, and performing a subsequent operation.

In the embodiment of the present application, if the operating mode of the on board network element is indicated as the coexistence mode, the on board MME determines the state of the feeder link after receiving the attach request NAS message sent by the terminal; if the feeder link is unavailable, the step of determining whether the attach request NAS message of the terminal is cached and subsequent steps are performed; if the feeder link is available, the on board network element acquires the authentication vector from the terrestrial network element, authenticates the terminal, and returns an attach accept message to the terminal after the authentication is passed, the attach accept message carrying configuration information indicating that the terminal works in the normal operating mode.

In an embodiment, the method further comprises: after an attach complete message sent by the terminal is received, deleting the cached authentication vector information of the terminal, the cached attach request NAS message and the cached identification information of the terminal; and sending an attach complete notification of the terminal to a terrestrial network element, wherein the attach complete notification is used for instructing the terrestrial network element to delete the authentication vector information of the terminal, the attach request NAS message and the identification information of the terminal.

In the embodiment of the present application, after the AKA authentication is passed, the on board MME can return the attach accept message to the terminal when the service link is available, the attach accept message carrying the configuration information indicating that the terminal operates in the store-and-forward mode. After receiving the attach accept message, the terminal sends the attach complete message to the on board MME. After receiving the attach complete message sent by the terminal, the on board MME deletes the cached authentication vector information of the terminal, the cached attach request NAS message and the cached identification information of the terminal, and sends the attach complete notification of the terminal to the terrestrial network element when the feeder link is available. After receiving the attach complete notification, the terrestrial network element deletes the authentication vector information of the terminal, the attach request NAS message, the identification information of the terminal, or the like. In an embodiment, for the case that the on board MME and the terrestrial network element further cache the request time of the attach request NAS message, the on board MME and the terrestrial network element may further delete the request time of the attach request NAS message.

In an embodiment, the terrestrial network element may notify other on board network elements to delete the cached identification information of the terminal, the cached attach request NAS message, the cached authentication vector, the cached request time, or the like, when the feeder links of the other on board network elements are available.

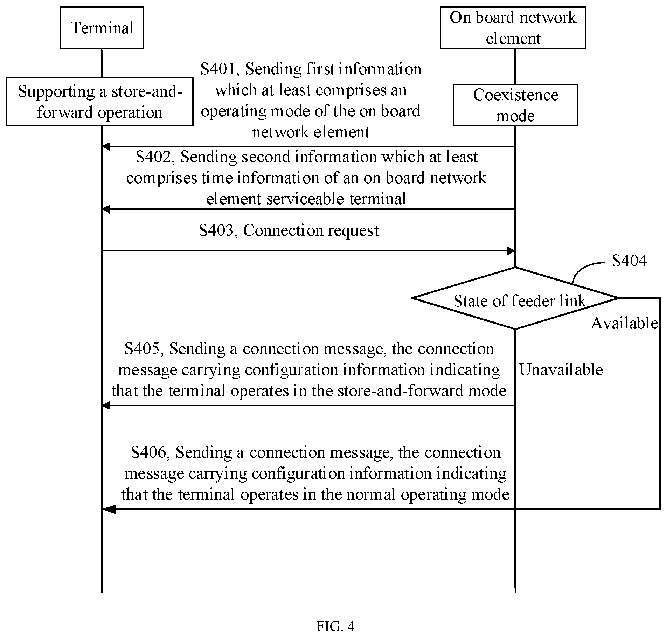

In an embodiment, as shown in FIG. 4, the present application provides an example of a communication method which may be applied to a communication system, and the communication system at least comprises an on board network element and a terminal, wherein the on board network element is in a coexistence mode, the terminal supports a store-and-forward mode, and the method specifically comprises the following steps S401 to S406.

Step S401: sending first information to the terminal by the on board network element.

The first information at least comprises an operating mode of the on board network element, and the operating mode of the on board network element is indicated as the coexistence mode.

Step S402: sending second information to the terminal by the on board network element.

The second information comprises time information of a terminal servable by the on board network element.

Step S403: when the terminal supports the store-and-forward mode, sending a connection request to the on board network element.

The connection request carries information indicating that the terminal supports the store-and-forward mode.

Step S404: determining a state of a feeder link by the on board network element.

Specifically, if the feeder link is unavailable, the step S405 is performed, and if the feeder link is available, the step S406 is performed.

Step S405: sending a connection message to the terminal.

The connection message carries configuration information indicating that the terminal operates in the store-and-forward mode.

Step S406: sending a connection message to the terminal.

The connection message carries configuration information indicating that the terminal operates in a normal operating mode.

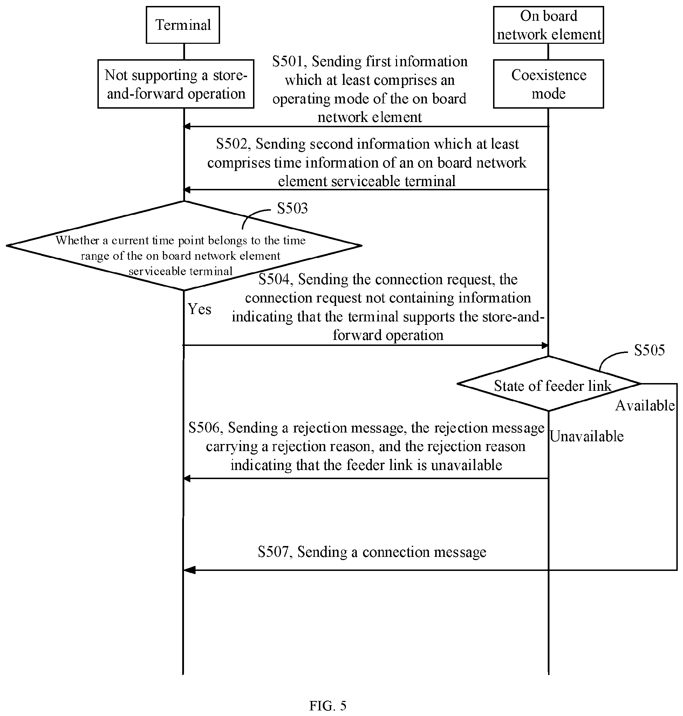

In an embodiment, as shown in FIG. 5, the present application provides an example of a communication method which may be applied to a communication system, and the communication system at least comprises an on board network element and a terminal, wherein the on board network element is in a coexistence mode, the terminal does not support a store-and-forward mode, and the method specifically comprises the following steps S501 to S507.

Step S501: sending first information to the terminal by the on board network element.

The first information at least comprises an operating mode of the on board network element, and the operating mode of the on board network element is indicated as the coexistence mode.

Step S502: sending second information to the terminal by the on board network element.

The second information comprises time information of a terminal servable by the on board network element. The time information comprises a start time of the terminal servable by the on board network element and an end time of the terminal servable by the on board network element, that is, the time information comprises a time range.

Step S503: when the terminal does not support the store-and-forward mode, determining whether to send a connection request according to the second information.

If a current time point belongs to the time range of the terminal servable by the on board network element, the step S504 is performed; and if the current time point does not belong to the time range of the terminal servable by the on board network element, a connection request is not sent.

Step S504: sending the connection request to the on board network element by the terminal.

The connection request does not contain information indicating that the terminal supports the store-and-forward mode.

Step S505: when the connection request received by the on board network element does not contain the information indicating that the terminal supports the store-and-forward mode, determining a state of a feeder link.

Specifically, if the feeder link is unavailable, the step S506 is performed, and if the feeder link is available, the step S507 is performed.

Step S506: sending a rejection message to the terminal.

The rejection message carries a rejection reason, and the rejection reason indicates that the feeder link is unavailable.

Step S507: sending a connection message to the terminal.

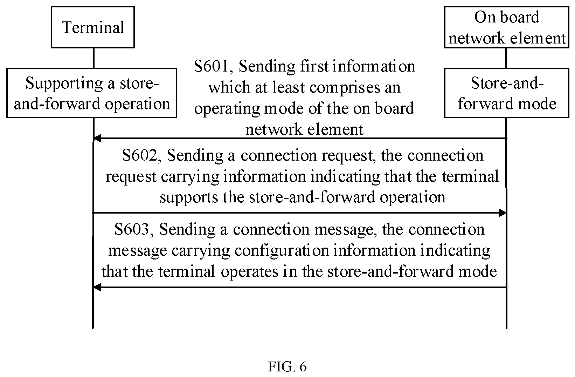

In an embodiment, as shown in FIG. 6, the present application provides an example of a communication method which may be applied to a communication system, and the communication system at least comprises an on board network element and a terminal, wherein the on board network element is in a store-and-forward mode, the terminal supports the store-and-forward mode, and the method specifically comprises the following steps S601 to S603.

Step S601: sending first information to the terminal by the on board network element.

The first information at least comprises an operating mode of the on board network element, and the operating mode of the on board network element is indicated as the store-and-forward mode.

Step S602: when the terminal supports the store-and-forward mode, sending a connection request to the on board network element.

The connection request carries information indicating that the terminal supports the store-and-forward mode. In addition, if the terminal does not support the store-and-forward mode, the connection request is not sent to the on board network element.

Step S603: when the connection request received by the on board network element contains the indication information indicating that the terminal supports the store-and-forward mode, sending a connection message to the terminal.

The connection message carries configuration information indicating that the terminal operates in the store-and-forward mode.

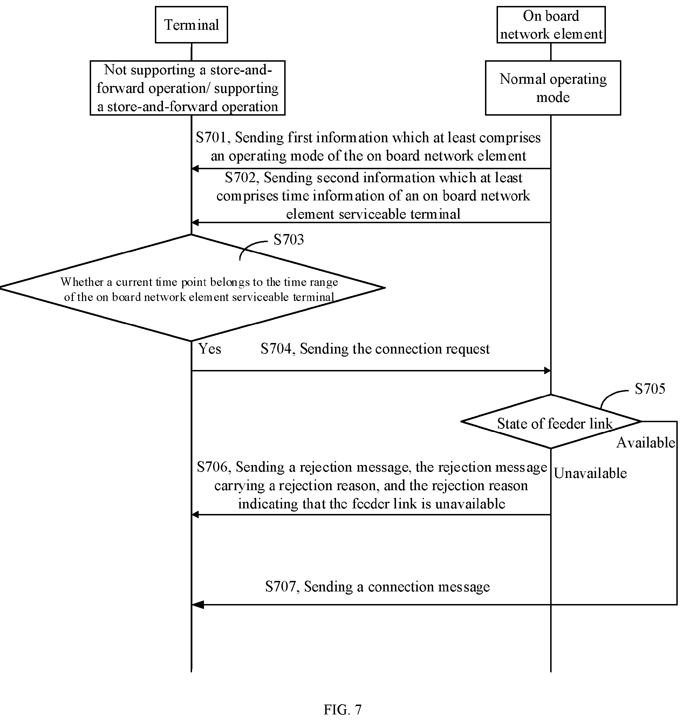

In an embodiment, as shown in FIG. 7, the present application provides an example of a communication method which may be applied to a communication system, and the communication system at least comprises an on board network element and a terminal, wherein the on board network element is in a normal operating mode, and the method specifically comprises the following steps S701 to S707.

Step S701: sending first information to the terminal by the on board network element.

The first information at least comprises an operating mode of the on board network element, and the operating mode of the on board network element is indicated as the normal operating mode.

Step S702: sending second information to the terminal by the on board network element.

The second information comprises time information of a terminal servable by the on board network element. The time information comprises a start time of the terminal servable by the on board network element and an end time of the terminal servable by the on board network element, that is, the time information comprises a time range.

Step S703: determining by the terminal according to the second information.

Specifically, if a current time point belongs to the time range of the terminal servable by the on board network element, the step S704 is performed; and if the current time point does not belong to the time range of the terminal servable by the on board network element, a connection request is not sent to the on board network element.

Step S704: sending the connection request to the on board network element.

Step S705: determining a state of a feeder link by the on board network element.

Specifically, if the feeder link is unavailable, the step S706 is performed, and if the feeder link is available, the step S707 is performed.

Step S706: sending a rejection message to the terminal.

The rejection message contains a rejection reason, and the rejection reason indicates that the feeder link is unavailable.

Step S707: sending a connection message to the terminal.

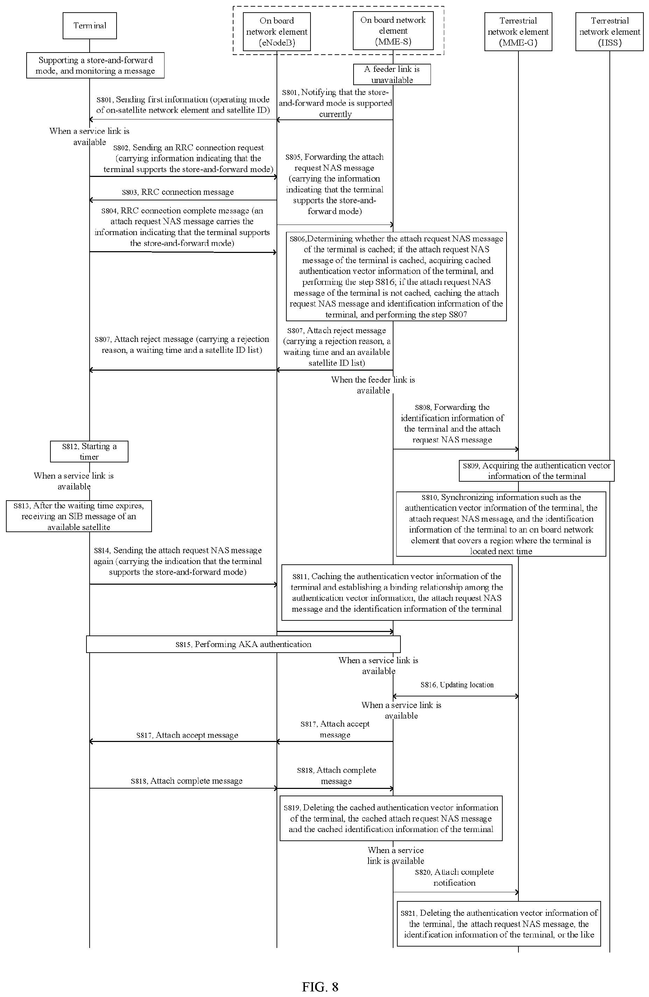

In an embodiment, as shown in FIG. 8, the present application provides an example of a communication method which can be applied to a communication system, and the communication system at least comprises an on board network element, a terminal, and a terrestrial network element. The on board network element comprises an eNodeB (which may be called an on board eNodeB) and an MME-S (which may be called an on board MME), the terrestrial network element comprises an MME-G and an HSS, the on board network element is in a store-and-forward mode, and the terminal supports the store-and-forward mode. The method specifically comprises the following steps S801 to S822.

Step S801: notifying the on board eNodeB of supporting of the store-and-forward mode by the on board MME, and forwarding first information to the terminal by the on board eNodeB .

The first information at least comprises an operating mode of the on board network element, a satellite ID, or the like, and the operating mode of the on board network element is indicated as the store-and-forward mode.

Step S802: when the terminal supports the store-and-forward mode, sending a connection request to the on board eNodeB.

The connection request carries information indicating that the terminal supports the store-and-forward mode.

Step S803: when the connection request received by the on board eNodeB contains the indication information indicating that the terminal supports the store-and-forward mode, sending a connection message to the terminal, and establishing an RRC connection.

Step S804: sending an RRC connection setup complete message to the on board eNodeB by the terminal.

The RRC connection setup complete message contains an attach request NAS message, and the attach request NAS message carries the information indicating that the terminal supports the store-and-forward mode.

Step S805: forwarding the attach message to the on board MME by the on board eNodeB.

Step S806: determining, by the on board MME, whether the attach request NAS message of the terminal is cached.

If the attach request NAS message of the terminal is cached, cached authentication vector information of the terminal is acquired, and the step S816 is executed; if the attach request NAS message of the terminal is not cached, the attach request NAS message and identification information of the terminal are cached, and the step S807 is executed.

Step S807: sending an attach reject message to the terminal by the on board MME through the on board eNodeB.

The attach reject message carries a rejection reason, a waiting time and an available satellite ID list. The rejection reason indicates that the attach procedure cannot be completed due to the store-and-forward mode, and the terminal is triggered to execute the step S812.

Step S808: when a feeder link is available, forwarding the attach request NAS message and the identification information of the terminal to the terrestrial network element by the on board MME.

The identification information of the terminal is one of an IMSI and a GUTI.

Step S809: acquiring the authentication vector information of the terminal by the MME-G.

Step S810: synchronizing, by the MME-G, information such as the authentication vector information of the terminal, the attach request NAS message, and the identification information of the terminal to an on board network element that covers a region where the terminal is located next time.

Step S811: by the on board MME, receiving the authentication vector information of the terminal sent by the terrestrial network element, caching the authentication vector information of the terminal and establishing a binding relationship among the authentication vector information, the attach request NAS message and the identification information of the terminal.

Step S812: starting a timer by the terminal.

Step S813: if a service link is available, after the waiting time expires, receiving an SIB message of an available satellite.

Step S814: sending the attach request NAS message to the on board MME by the terminal again.

The attach request NAS message carries information indicating that the terminal supports the store-and-forward mode.

Step S815: performing AKA authentication on the terminal by the on board MME.

Step S816: performing location updating by the on board MME when the feeder link is available.

Step S817: when the service link is available, sending an attach accept message to the terminal by the on board MME through the on board network element, the attach accept message carrying configuration information indicating that the terminal operates in the store-and-forward mode.

Step S818: sending an attach complete message to the on board MME by the terminal.

Step S819: deleting, by the on board MME, the cached authentication vector information of the terminal, the cached attach request NAS message and the cached identification information of the terminal.

Step S820: when the feeder link is available, sending an attach complete notification of the terminal to the MME-G by the on board MME.

The attach complete notification is used for instructing the terrestrial network element to delete the authentication vector information of the terminal, the attach request NAS message, and the identification information of the terminal.

Step S821: deleting, by the MME-G, the authentication vector information of the terminal, the attach request NAS message, the identification information of the terminal, or the like.

It should be understood that, although the steps in the flow charts of FIG. 2 to FIG. 8 are shown in sequence as indicated by the arrows, the steps are not necessarily performed in sequence as indicated by the arrows. Unless explicitly stated herein, the steps are not limited to being performed in the exact order and may be performed in other orders. At least part of the steps in FIG. 2 to FIG. 8 may include multiple steps or multiple stages, which are not necessarily performed at the same moment, but may be performed at different moments, and the steps or the stages are not necessarily performed in sequence, but may be performed alternately with other steps or at least part of the steps or the stages in other steps.

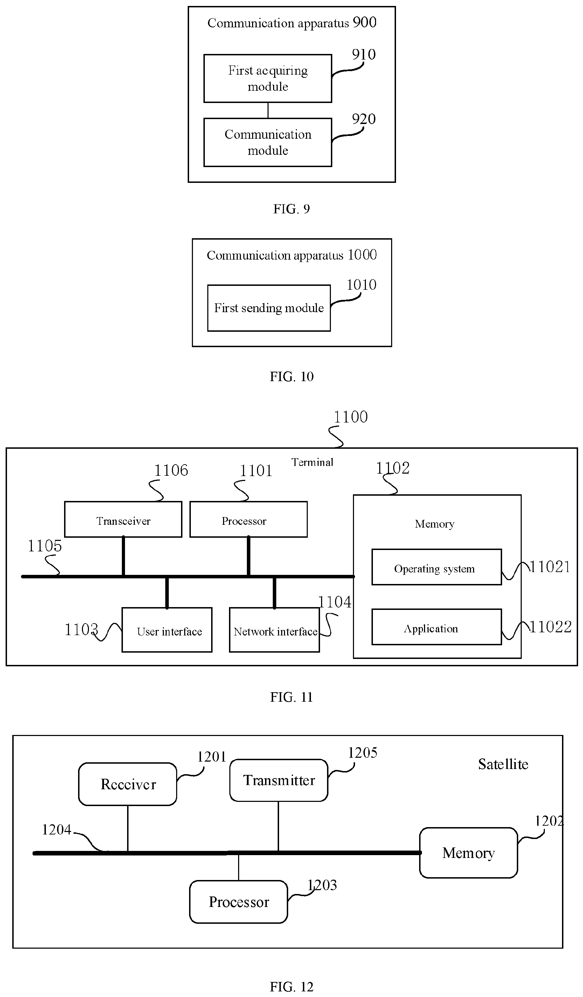

In an embodiment, as shown in FIG. 9, there is provided a communication apparatus applied to a terminal, including:
a first acquiring module 910 configured to acquire first information sent by an on board network element, wherein the first information at least comprises an operating mode of the on board network element; and
a communication module 920 configured to perform communication processing on the basis of a terminal capability and the first information.

In an embodiment, the operating mode of the on board network element at least comprises one of a normal operating mode, a store-and-forward mode and a coexistence mode.

In an embodiment, when the operating mode of the on board network element is indicated as the normal operating mode and/or the coexistence mode, the apparatus further comprises:
a second acquiring module configured to acquire second information, the second information comprising time information of a terminal servable by the on board network element.

In an embodiment, the time information of the terminal servable by the on board network element comprises a start time of the terminal servable by the on board network element and an end time of the terminal servable by the on board network element, that is, the time information comprises a time range.

In an embodiment, the terminal capability specifically indicates whether the terminal supports the store-and-forward mode.

In an embodiment, the communication module 920 may be specifically configured to:
if the operating mode of the on board network element is indicated as the coexistence mode and the terminal supports the store-and-forward mode, send a connection request to the on board network element, the connection request carrying information indicating that the terminal supports the store-and-forward mode.

In an embodiment, the communication module 920 may be specifically configured to:
if the operating mode of the on board network element is indicated as the coexistence mode and the terminal does not support the store-and-forward mode, determine according to the second information, and if a current time point belongs to the time range of the terminal servable by the on board network element, send a connection request to the on board network element.

In an embodiment, the communication module 920 may be specifically configured to:
if the operating mode of the on board network element is indicated as the store-and-forward mode and the terminal supports the store-and-forward mode, send a connection request to the on board network element, the connection request carrying information indicating that the terminal supports the store-and-forward mode.

In an embodiment, the communication module 920 may be specifically configured to:
if the operating mode of the on board network element is indicated as the store-and-forward mode and the terminal does not support the store-and-forward mode, not send a connection request to the on board network element.

In an embodiment, the communication module 920 may be specifically configured to:
if the operating mode of the on board network element is indicated as the normal operating mode, determine according to the second information, and if a current time point belongs to the time range of the terminal servable by the on board network element, send a connection request to the on board network element.

In an embodiment, the connection request at least comprises one or more of the RRC connection request, the RRC connection resume request, and the RRC connection reestablishment request.

In an embodiment, the communication module may be specifically configured to:
if the operating mode of the on board network element is indicated as the coexistence mode and the terminal supports the store-and-forward mode, send an attach request NAS message to the on board network element, the attach request NAS message carrying information indicating that the terminal supports the store-and-forward mode.

In an embodiment, the communication module may be specifically configured to:
if the operating mode of the on board network element is indicated as the store-and-forward mode and the terminal supports the store-and-forward mode, send an attach request NAS message to the on board network element, the attach request NAS message carrying information indicating that the terminal supports the store-and-forward mode.

In an embodiment, the first information further comprises a satellite ID.

In an embodiment, as shown in FIG. 10, there is provided a communication apparatus applied to an on board network element, including:
a first sending module 1010 configured to send first information to a terminal, wherein the first information at least comprises an operating mode of the on board network element, and is configured to enable the terminal to perform communication processing on the basis of a terminal capability and the first information.

In an embodiment, the operating mode of the on board network element at least comprises one of a normal operating mode, a store-and-forward mode and a coexistence mode.

In an embodiment, when the operating mode of the on board network element is indicated as the normal operating mode and/or the coexistence mode, the apparatus further comprises:
a second sending module configured to send second information to the terminal, the second information comprising time information of a terminal servable by the on board network element.

In an embodiment, the time information of the terminal servable by the on board network element comprises a start time of the terminal servable by the on board network element and an end time of the terminal servable by the on board network element, that is, the time information comprises a time range.

In an embodiment, the time information of the terminal servable by the on board network element is calculated by the on board network element according to a satellite ephemeris and terrestrial gateway station information.

In an embodiment, the operating mode of the on board network element is configured by a preset strategy.

In an embodiment, the apparatus further includes:
a receiving module configured to receive a connection request sent by the terminal.

In an embodiment, the apparatus further includes:
a first determining module configured to, if the operating mode of the on board network element is indicated as the coexistence mode and the received connection request contains information indicating that the terminal supports the store-and-forward mode, determine a state of a feeder link;
a third sending module configured to, if the feeder link is unavailable, send a connection message to the terminal, wherein the connection message carries configuration information indicating that the terminal operates in the store-and-forward mode; and
a fourth sending module configured to, if the feeder link is available, send a connection message to the terminal, wherein the connection message carries configuration information indicating that the terminal operates in the normal operating mode.

In an embodiment, the apparatus further includes:
a second determining module configured to, if the operating mode of the on board network element is indicated as the coexistence mode and the received connection request does not contain information indicating that the terminal supports the store-and-forward mode, determine a state of a feeder link;
a fifth sending module configured to, if the feeder link is unavailable, send a rejection message to the terminal, wherein the rejection message carries a rejection reason, and the rejection reason indicates that the feeder link is unavailable; and
a sixth sending module configured to, if the feeder link is available, send a connection message to the terminal.

In an embodiment, the apparatus further includes:
a seventh sending module configured to, if the operating mode of the on board network element is indicated as the store-and-forward mode and the received connection request contains indication information indicating that the terminal supports the store-and-forward mode, send a connection message to the terminal, wherein the connection message carries configuration information indicating that the terminal operates in the store-and-forward mode.

In an embodiment, the apparatus further includes:
a third determining module configured to, if the operating mode of the on board network element is indicated as the normal operating mode and a connection message sent by the terminal is received, determine a state of a feeder link:
an eighth sending module configured to, if the feeder link is unavailable, send a rejection message to the terminal, wherein the rejection message contains a rejection reason, and the rejection reason indicates that the feeder link is unavailable; and
a ninth sending module configured to, if the feeder link is available, send a connection message to the terminal.

In an embodiment, the connection request at least comprises one or more of an RRC connection request, an RRC connection resume request, and an RRC connection reestablishment request;
when the connection request is the RRC connection request, the connection message is an RRC connection setup message, and the rejection message is an RRC connection reject message;
when the connection request is the RRC connection resume request, the connection message is an RRC connection resume message, and the rejection message is an RRC connection resume reject message; and
when the connection request is the RRC connection reestablishment request, the connection message is an RRC connection reestablishment message, and the rejection message is an RRC connection reestablishment reject message.

In an embodiment, the apparatus further includes:
a second receiving module configured to receive an attach request NAS message sent by the terminal, wherein the attach request NAS message carries information indicating that the terminal supports a store-and-forward mode.

In an embodiment, the second receiving module may be further configured to:
determine whether the attach request NAS message of the terminal is cached;
if the attach request NAS message of the terminal is cached, acquire cached authentication vector information of the terminal, and authenticate the terminal based on the authentication vector information; and after the authentication is passed, return an attach accept message to the terminal, the attach accept message carrying configuration information indicating that the terminal operates in the store-and-forward mode; and
if the attach request NAS message of the terminal is not cached, cache the attach request NAS message and identification information of the terminal, and send an attach reject message to the terminal, the attach reject message carrying a rejection reason, a waiting time and an available satellite ID list, and the rejection reason indicating that an attach procedure cannot be completed due to the store-and-forward mode; the identification information being one of an IMSI and a GUTI.

In an embodiment, the second receiving module may be further configured to:
when the feeder link is available, forward the attach request NAS message and the identification information of the terminal to a terrestrial network element; and
receive the authentication vector information of the terminal sent by the terrestrial network element, cache the authentication vector information of the terminal, and establish a binding relationship among the authentication vector information, the attach request NAS message and the identification information of the terminal.

In an embodiment, the second receiving module may be further configured to:
if the operating mode of the on board network element is indicated as a coexistence mode, determine a state of the feeder link;
if the feeder link is unavailable, determine whether an attach request NAS message of the terminal is cached; and if the feeder link is available, acquire an authentication vector from a terrestrial network element, authenticate the terminal, and after the authentication is passed, return an attach accept message to the terminal, the attach accept message carrying configuration information indicating that the terminal operates in a normal operating mode.

In an embodiment, the second receiving module may be further configured to:
after an attach complete message sent by the terminal is received, delete the cached authentication vector information of the terminal, the cached attach request NAS message and the cached identification information of the terminal; and
send an attach complete notification of the terminal to a terrestrial network element, the attach complete notification being used for instructing the terrestrial network element to delete the authentication vector information of the terminal, the attach request NAS message and the identification information of the terminal.

In an embodiment, the first information further comprises a satellite ID.

Reference may be made to the definitions of the communication method described above for specific definitions of the communication apparatus, which are not repeated herein. The modules in the communication apparatus may be wholly or partially implemented by software, hardware and a combination thereof. The modules may be embedded in or independent of a processor in a computer device in hardware, or may be stored in a memory in the computer device in software, such that the processor can conveniently call the modules to execute the operations corresponding to the modules.

In an embodiment, there is provided a communication device, as shown in FIG. 11. FIG. 11 is a schematic structural diagram of a terminal device according to an embodiment of the present application. The terminal device 1100 shown in FIG. 11 may include: at least one processor 1101, a memory 1102, at least one network interface 1104, and a user interface 1103. The various components in the terminal device 1100 are coupled together by a bus system 1105. It may be appreciated that the bus system 1105 is configured to implement connected communication between these components. The bus system 1105 may include a power bus, a control bus, and a status signal bus in addition to a data bus. For clarity of illustration, however, the various buses are labeled as the bus system 1105 in FIG. 11. In addition, in the embodiments of the present application, the terminal device 1100 may further include a transceiver 1106, and the transceiver 1106 may include multiple elements, that is, include a transmitter and a receiver, and is configured to provide units for communicating with various other apparatuses over a transmission medium.

The user interface 1103 may include a display, a keyboard, or a pointing device (e.g., a mouse, a trackball, a touch pad, a touch screen, or the like).

It is to be understood that the memory 1102 in the embodiments of the present application can be a transitory memory or a non-transitory memory, or can include both transitory and non-transitory memories. The non-transitory memory may be a read-only memory (ROM), a programmable ROM (PROM), an erasable PROM (EPROM), an electrically EPROM (EEPROM), or a flash memory. The transitory memory may be a random access memory (RAM) serving as an external cache. By way of example and not limitation, many forms of RAMs are available, such as a static RAM (SRAM), a dynamic RAM (DRAM), a synchronous DRAM (SDRAM), a double data rate SDRAM (DDRSDRAM), an enhanced SDRAM (ESDRAM), a synchlink DRAM (SLDRAM), and a direct rambus RAM (DRRAM). The memory 1102 of the system and methods described in the embodiments of the present application is intended to comprise, but not limited to, these and any other suitable types of memories.

In some implementations, the memory 1102 stores the following elements: executable modules or data structures, or subsets thereof or expanded sets thereof: an operating system 11021 and applications 11022.

The operating system 11021 includes various system programs such as a framework layer, a core library layer, and a driver layer for implementing various basic services and processing hardware-based tasks. The applications 11022 include various applications such as MediaPlayer and Browser for implementing various application services. Programs for implementing the methods according to the embodiments of the present application can be included in the applications 11022.

In the embodiments of the present application, programs or instructions stored in the memory 1102, specifically, programs or instructions stored in the applications 11022 can be called. The receiver is configured to acquire first information sent by a satellite, the first information at least comprising operating mode indication information and/or a store-and-forward mode auxiliary parameter; the processor is configured to perform communication processing based on the first information.

It is to be understood that the embodiments described herein may be implemented in hardware, software, firmware, middleware, microcodes, or any combination thereof. For the hardware implementation, processing units may be implemented in one or more application specific integrated circuits (ASICs), digital signal processors (DSPs), digital signal processing devices (DSPDs), programmable logic devices (PLDs), field-programmable gate arrays (FPGAs), general-purpose processors, controllers, microcontrollers, microprocessors, other electronic units for performing the functions of the present application, or combinations thereof.

For the software implementation, the technology described in the embodiments of the present application may be implemented with modules (e.g., processes, functions, or the like) that perform the functions described in the embodiments of the present application. The software codes may be stored in the memory and executed by the processor 1101. The memory may be implemented in or outside the processor 1101.

In an embodiment, FIG. 12 is a schematic structural diagram of the on board network element in the embodiment of the present application. The on board network element may include a receiver 1201, a memory 1202, a processor 1203, at least one communication bus 1204, and a transmitter 1205. The communication bus 1204 is configured to implement communication connections between the elements. The memory 1202 may include a high-speed RAM, and may also include a non-volatile memory (NVM) such as at least one disk memory, and various programs may be stored in the memory 1202 for performing various processing functions and implementing the method steps of this embodiment. In this embodiment, the transmitter 1205 may be a radio frequency processing module or a baseband processing module in the on board network element, the receiver 1201 may also be a radio frequency processing module or a baseband processing module in the on board network element, the transmitter 1205 and the receiver 1201 may be integrated together to be implemented as a transceiver, and both the transmitter 1205 and the receiver 1201 may be coupled to the processor 1203, and may implement a receiving or sending action under an instruction or control of the processor 1203.

In an embodiment, there is provided a computer-readable storage medium having a computer program stored thereon, wherein the computer program, when executed by a processor, implements the steps of the above methods.

In an embodiment, there is provided a computer program product including a computer program which, when executed by a processor, implements the steps of the above methods.

It will be understood by those skilled in the art that all or part of the processes of the method according to the embodiments described above may be implemented by a computer program instructing related hardware, and the computer program may be stored in a non-transitory computer-readable storage medium, and when executed, may include the processes of the embodiments of the method described above. Any reference to memories, storage, databases or other media used in the embodiments of the present application can include at least one of a non-transitory memory and a transitory memory. The non-transitory memory may include a read-only memory (ROM), magnetic tape, a floppy disk, a flash memory, an optical memory, or the like. The transitory memory can include a random access memory (RAM) or an external cache memory. By way of illustration and not limitation, the RAM can take many forms such as a static random access memory (SRAM) and a dynamic random access memory (DRAM).

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present application, and the descriptions are relatively specific and detailed, but they should not be construed as limiting the scope of the present invention. It should be understood by those of ordinary skill in the art that various modifications and improvements can be made without departing from the concept of the present application, and all fall within the protection scope of the present application. Therefore, the protection scope of the present application should be subject to the appended claims.

## Claims

1. A communication method applied to a terminal, comprising:
acquiring first information sent by an on board network element, wherein the first information at least comprises an operating mode of the on board network element; and
performing communication processing on the basis of a terminal capability and the first information, wherein the terminal capability indicates whether the terminal supports a store-and-forward mode.

2. The method according to claim 1, wherein the operating mode of the on board network element at least comprises one of a normal operating mode, the store-and-forward mode and a coexistence mode.

3. The method according to claim 2, wherein when the operating mode of the on board network element is indicated as the normal operating mode and/or the coexistence mode, the method further comprises:
acquiring second information, the second information comprising time information of a terminal servable by the on board network element.

4. The method according to claim 3, wherein the time information of the terminal servable by the on board network element comprises a time range between a start time of the terminal servable by the on board network element and an end time of the terminal servable by the on board network element.

5. The method according to claim 2, wherein performing the communication processing on the basis of the terminal capability and the first information comprises:
if the operating mode of the on board network element is indicated as the coexistence mode and the terminal supports the store-and-forward mode, sending a connection request to the on board network element, the connection request carrying information indicating that the terminal supports the store-and-forward mode.

6. The method according to claim 4, wherein performing the communication processing on the basis of the terminal capability and the first information comprises:
if the operating mode of the on board network element is indicated as the coexistence mode and the terminal does not support the store-and-forward mode, determining whether to send a connection request according to the second information, and if a current time point belongs to the time range of the terminal servable by the on board network element, sending a connection request to the on board network element.

7. The method according to claim 2, wherein performing the communication processing on the basis of the terminal capability and the first information comprises:
if the operating mode of the on board network element is indicated as the store-and-forward mode and the terminal supports the store-and-forward mode, sending a connection request to the on board network element, the connection request carrying information indicating that the terminal supports the store-and-forward mode.

8. The method according to claim 2, wherein performing the communication processing on the basis of the terminal capability and the first information comprises:
if the operating mode of the on board network element is indicated as the store-and-forward mode and the terminal does not support the store-and-forward mode, not sending a connection request to the on board network element.

9. The method according to claim 4, wherein performing the communication processing on the basis of the terminal capability and the first information comprises:
if the operating mode of the on board network element is indicated as the normal operating mode, determining whether to send a connection request according to the second information, and if a current time point belongs to the time range of the terminal servable by the on board network element, sending a connection request to the on board network element.

10. The method according to any one of claims 5 to 9, wherein the connection request at least comprises one or more of an RRC connection request, an RRC connection resume request, and an RRC connection reestablishment request.

11. The method according to claim 2, wherein performing the communication processing on the basis of the terminal capability and the first information comprises:
if the operating mode of the on board network element is indicated as the coexistence mode and the terminal supports the store-and-forward mode, sending an attach request NAS message to the on board network element, the attach request NAS message carrying information indicating that the terminal supports the store-and-forward mode.

12. The method according to claim 2, wherein performing the communication processing on the basis of the terminal capability and the first information comprises:
if the operating mode of the on board network element is indicated as the store-and-forward mode and the terminal supports the store-and-forward mode, sending an attach request NAS message to the on board network element, the attach request NAS message carrying information indicating that the terminal supports the store-and-forward mode.

13. The method according to claim 2, wherein the first information further comprises a satellite identity (ID).

14. A communication method applied to an on board network element, comprising:
sending first information to a terminal, wherein the first information at least comprises an operating mode of the on board network element, and is configured to enable the terminal to perform communication processing on the basis of a terminal capability and the first information.

15. The method according to claim 14, wherein the operating mode of the on board network element at least comprises one of a normal operating mode, a store-and-forward mode and a coexistence mode.

16. The method according to claim 15, wherein when the operating mode of the on board network element is indicated as the normal operating mode and/or the coexistence mode, the method further comprises:
sending second information to the terminal, the second information comprising time information of a terminal servable by the on board network element.

17. The method according to claim 16, wherein the time information of the terminal servable by the on board network element comprises a time range between a start time of the terminal servable by the on board network element and an end time of the terminal servable by the on board network element.

18. The method according to claim 17, wherein the time information of the terminal servable by the on board network element is calculated by the on board network element according to a satellite ephemeris and terrestrial gateway station information.

19. The method according to claim 15, wherein the operating mode of the on board network element is configured by a preset strategy.

20. The method according to claim 15, further comprising:
receiving a connection request sent by the terminal.

21. The method according to claim 20, further comprising:
if the operating mode of the on board network element is indicated as the coexistence mode and the received connection request contains information indicating that the terminal supports the store-and-forward mode, determining a state of a feeder link;
if the feeder link is unavailable, sending a first connection message to the terminal, wherein the first connection message carries configuration information indicating that the terminal operates in the store-and-forward mode; and
if the feeder link is available, sending a second connection message to the terminal, wherein the second connection message carries configuration information indicating that the terminal operates in the normal operating mode.

22. The method according to claim 20, further comprising:
if the operating mode of the on board network element is indicated as the coexistence mode and the received connection request does not contain information indicating that the terminal supports the store-and-forward mode, determining a state of a feeder link;
if the feeder link is unavailable, sending a rejection message to the terminal, wherein the rejection message carries a rejection reason, and the rejection reason indicates that the feeder link is unavailable; and
if the feeder link is available, sending a connection message to the terminal.

23. The method according to claim 20, further comprising:
if the operating mode of the on board network element is indicated as the store-and-forward mode and the received connection request contains indication information indicating that the terminal supports the store-and-forward mode, sending a connection message to the terminal, wherein the connection message carries configuration information indicating that the terminal operates in the store-and-forward mode.

24. The method according to claim 20, further comprising:
if the operating mode of the on board network element is indicated as the normal operating mode and a connection message sent by the terminal is received, determining a state of a feeder link:
if the feeder link is unavailable, sending a rejection message to the terminal, wherein the rejection message contains a rejection reason, and the rejection reason indicates that the feeder link is unavailable; and if the feeder link is available, sending a connection message to the terminal.

25. The method according to any one of claims 20 to 24, wherein the connection request at least comprises one or more of an RRC connection request, an RRC connection resume request, and an RRC connection reestablishment request;
when the connection request is the RRC connection request, the connection message is an RRC connection setup message, and the rejection message is an RRC connection reject message;
when the connection request is the RRC connection resume request, the connection message is an RRC connection resume message, and the rejection message is an RRC connection resume reject message; and when the connection request is the RRC connection reestablishment request, the connection message is an RRC connection reestablishment message, and the rejection message is an RRC connection reestablishment reject message.

26. The method according to claim 14, further comprising:
receiving an attach request NAS message sent by the terminal, wherein the attach request NAS message carries information indicating that the terminal supports a store-and-forward mode.

27. The method according to claim 26, further comprising:
determining whether the attach request NAS message of the terminal is cached;
if the attach request NAS message of the terminal is cached, acquiring cached authentication vector information of the terminal, and authenticating the terminal based on the authentication vector information; and after the authentication is passed, returning an attach accept message to the terminal, wherein the attach accept message carries configuration information indicating that the terminal operates in the store-and-forward mode; and
if the attach request NAS message of the terminal is not cached and a feeder link is unavailable, caching the attach request NAS message and identification information of the terminal, and sending an attach reject message to the terminal, wherein the attach reject message carries a rejection reason, a waiting time and an available satellite ID list, and the rejection reason indicates that an attach procedure cannot be completed due to the store-and-forward mode; wherein the identification information is one of an IMSI and a GUTI.

28. The method according to claim 27, wherein after sending the attach reject message to the terminal, the method further comprises:
when the feeder link is available, forwarding the attach request NAS message and the identification information of the terminal to a terrestrial network element; and
receiving the authentication vector information of the terminal sent by the terrestrial network element, caching the authentication vector information of the terminal, and establishing a binding relationship among the authentication vector information, the attach request NAS message and the identification information of the terminal.

29. The method according to claim 27, further comprising:
if the operating mode of the on board network element is indicated as a coexistence mode, determining a state of the feeder link;
if the feeder link is unavailable, determining whether the attach request NAS message of the terminal is cached; and
if the feeder link is available, acquiring an authentication vector from a terrestrial network element, authenticating the terminal, and after the authentication is passed, returning the attach accept message to the terminal, wherein the attach accept message carries configuration information indicating that the terminal operates in a normal operating mode.

30. The method according to claim 26 or 27, further comprising:
after an attach complete message sent by the terminal is received, deleting the cached authentication vector information of the terminal, the cached attach request NAS message and the cached identification information of the terminal; and
sending an attach complete notification of the terminal to a terrestrial network element, wherein the attach complete notification is used for instructing the terrestrial network element to delete the authentication vector information of the terminal, the attach request NAS message and the identification information of the terminal.

31. The method according to claim 14, wherein the first information further comprises a satellite ID.

32. A communication system, comprising a terminal and an on board network element,
wherein the on board network element is configured to send first information to the terminal, the first information at least comprising an operating mode of the on board network element; and
the terminal is configured to acquire the first information sent by the on board network element and perform communication processing according to a terminal capability and the first information.

33. A communication apparatus applied to a terminal, comprising:
a first acquiring module configured to acquire first information sent by an on board network element, wherein the first information at least comprises an operating mode of the on board network element; and
a communication module configured to perform communication processing on the basis of a terminal capability and the first information, wherein the terminal capability indicates whether the terminal supports a store-and-forward mode.

34. A communication apparatus applied to an on board network element, comprising:
a first sending module configured to send first information to a terminal, wherein the first information at least comprises an operating mode of the on board network element, and is configured to enable the terminal to perform communication processing on the basis of a terminal capability and the first information.

35. A communication device, comprising a receiver and a processor;
wherein the receiver is configured to acquire first information sent by an on board network element, the first information at least comprising an operating mode of the on board network element; and
the processor is configured to perform communication processing according to a terminal capability and the first information.

36. A communication device, comprising a transmitter;
wherein the transmitter is configured to send first information to a terminal, wherein the first information at least comprises an operating mode of an on board network element, and is configured to enable the terminal to perform communication processing on the basis of a terminal capability and the first information.

37. A computer-readable storage medium having a computer program stored thereon, wherein the computer program, when executed by a processor, implements the method according to any one of claims 1 to 13 or 14 to 31.

38. A computer program product comprising a computer program, wherein the computer program, when executed by a processor, implements the method according to any one of claims 1 to 13 or 14 to 31.
